# EUROPÄISCHE PATENTSCHRIFT

(11) **EP 0 904 956 B1**
(45) Veröffentlichungstag und Bekanntmachung des Hinweises auf die Patenterteilung: **28.07.2004**
(21) Anmeldenummer: 98810927.8
(22) Anmeldetag: 17.09.1998
(51) Int. Cl.: B60B 27/00

(54) **Baueinheit für Kraftfahrzeugräder**
Assembly for vehicle wheels
Assemblage pour roues de véhicules

(30) Priorität: 24.09.1997 DE 19742027
(43) Veröffentlichungstag der Anmeldung: 31.03.1999
(73) Patentinhaber: Georg Fischer Fahrzeugtechnik AG, 8201 Schaffhausen (CH)
(72) Erfinder: Hofmann, Heinrich, 97422 Schweinfurt (DE); Breitenbach, Rainer, 97469 Gochsheim (DE); Merklein, Harald, 97421 Schweinfurt (DE); Niebling, Peter, 97688 Bad Kissingen (DE); Mahnig, Fritz, 8201 Schaffhausen (CH); Rau, Guido, 78464 Konstanz (DE)
(74) Vertreter: Weiss, Wolfgang, Dr.

(56) Entgegenhaltungen:
- DE-A- 3 340 442
- DE-A- 19 538 212
- US-A- 4 172 621
- US-A- 4 424 047
- US-A- 4 798 560
- US-A- 5 386 630
- US-A- 5 651 588

## Beschreibung

Die Erfindung betrifft eine Baueinheit für Kraftfahrzeugräder nach dem Oberbegriff des Anspruchs 1.

Das Bestreben im Automobilbau, Kraftstoff zu sparen, führt zunehmend zur Verwendung von Aluminiumwerkstoffen. Diese leichtbauenden Materialien haben neben ihren Vorteilen, wie z. B. Korrosionsfreiheit, geringes Gewicht usw. aber auch Nachteile, insbesondere geringere Festigkeit, größerer Wärmeausdehnungskoeffizient sowie eine geringe zulässige Flächenpressung und höherer Preis.

Bei der Radaufhängung von Kraftfahrzeugrädern sind sogenannte Schwenklager (vorn) oder Radträger (hinten) im Einsatz, die dazu dienen, die von den Federbeinen kommenden Kräfte (Fahrzeuggewicht) über die Radlagerung auf die Räder und somit auf die Straße zu übertragen. Außerdem werden Angriffspunkte für die Lenkarmanlenkung und den Bremssattel sowie für den Querlenker benötigt. Die Schwenklager sind hochbeanspruchte und sicherheitsrelevante Teile, die zudem noch stark korrosionsgefährdet sind (Streusalz).

Aus der DE-OS 33 40 442 und der gattungsgemäßen DE-OS 195 38 212 sind Konstruktionen bekannt, mit deren Hilfe diese Probleme gelöst werden. Dabei besteht aber die große Gefahr, daß beim axialen Verschrauben so hohe Kräfte ausgeübt werden, dass Teile unzulässig hoch verspannt werden, wobei z. B. sogar die Anlageflansche, an die das Wälzlager durch die Verschraubung angedrückt wird, abbrechen.

Es ist deshalb Aufgabe der Erfindung, eine Baueinheit für Kraftfahrzeugräder aufzuzeigen, welche die vorgenannten Nachteile nicht aufweist und eine unzulässige hohe axiale Verspannung oder gar Zerstörung der Lager- und Umgebungsteile vermieden wird, die sich durch die Doppelpassung ergibt.

Die Lösung der Aufgabe gelingt mit den im kennzeichnenden Teil des Anspruchs 1 angegebenen Merkmalen. Eine vorteilhafte Weiterbildung ist in Anspruch 2 angegeben.

Dadurch, daß die Radlagereinheit in ein Gehäuse eingepreßt ist, in welches Bremsbefestigungsmittel z. B. Bremsträgerarme oder Bremsträgeranschlußbohrungen integriert sind, läßt sich ein guter Lagersitz verwirklichen und auch bezüglich der Festigkeit die Einheit optimieren, wobei durch eine mögliche werkstoffmäßige Trennung des Radträgers dieser aus Aluminium, Eisenguß oder Stahl gefertigt sein kann und somit leicht baut. Besonders vorteilhaft ist dabei, daß durch die axiale Verschraubung des Gehäuses mit dem Radträger gleichzeitig die Radlagereinheit axial in genau zu definierender Weise verspannt wird, wodurch die Mikrobewegungen und Knackgeräusche vermieden werden, da die bei Kurvenfahrt auftretenden Momente teilweise axial über die Lagerstirnflächen übertragen werden.

Weiterhin hat diese Bauweise den Vorteil, daß verschiedene Bremsen bzw. Radlagergrößen mit ein und demselben Schwenklager kombinierbar sind.

Die Erfindung soll an zwei Ausführungsbeispielen näher erläutert werden. Es zeigt:
- Figur 1: eine erfindungsgemäße Baueinheit im Schnitt.
- Figur 2: eine erfindungsgemäße Baueinheit in der Seitenansicht.
- Figur 3: eine erfindungsgemäße Baueinheit im Schnitt mit einem umlaufenden elastischen Ansatz.

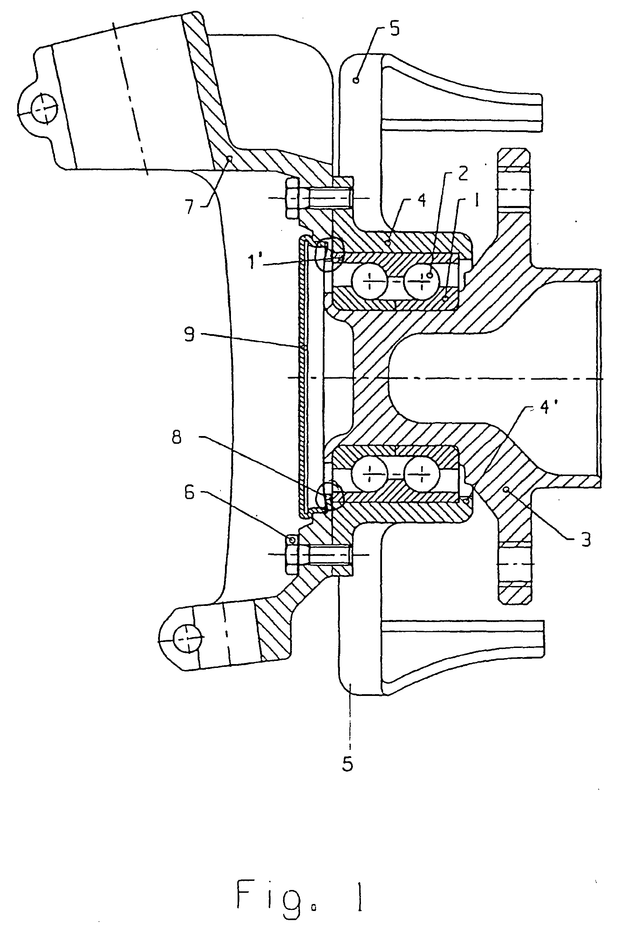

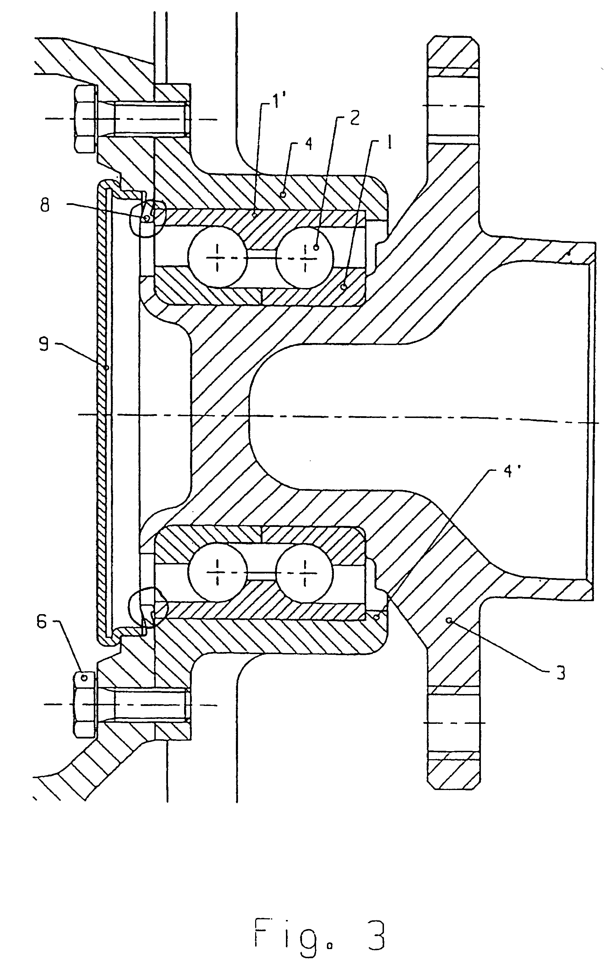

In Figur 1 ist die Radlagerung mit 1 bezeichnet. Sie ist als integrierte Baueinheit ausgebildet, wobei das Wälzlager 2 und der Radflansch 3 formschlüssig miteinander verbunden sind. Das Wälzlager 2 ist in die Bohrung des Gehäuses 4 eingepreßt, welches in diesem Fall zwei Bremsträgerarme 5 besitzt, die in das Gehäuse 4 integriert sind. Am Radflansch 3 ist noch die Bremsscheibe (nicht gezeigt) angeordnet. Das Gehäuse 4 kann aus hochwertigem Sphäroguß (GGG) oder Stahl gefertigt werden und bietet eine hohe Festigkeit zur Aufnahme der Radlager- und Bremskräfte, sowie einen guten Lagersitz für das Wälzlager 2. Da Sphäroguß und Wälzlagerstahl nahezu den gleichen Wärmeausdehungskoeffizienten aufweisen, entstehen die eingangs genannten Probleme nicht. Durch Schrauben 6 ist das Gehäuse 4 mit der Radlagereinheit 1 am Radträger 7 aus Aluminium befestigt, wobei durch den Ansatz 8 gleichzeitig eine axiale Verspannung des Wälzlagers 2 erfolgt, so daß Knackgeräusche vermieden werden. Um eine definierte axiale Verspannung zu erreichen, ist im Schwenklager oder im Integralträger ein elastisch verformbarer Ansatz 8 vorgesehen (siehe auch Figur 3). Eventuelle Ungenauigkeiten durch die Doppelpassung werden dadurch ausgeglichen und eine unzulässig hohe Verspannung des Lageraußenrings durch die Schrauben 6 vermieden. Damit wird auch die Gefahr eines Bruches z. B. des Halteflansches 4' des Gehäuses 4 wesentlich reduziert. Ein Blechdeckel 9 der ebenfalls aus Aluminium gefertigt ist, schützt das Wälzlager 2 vor Verschmutzung.

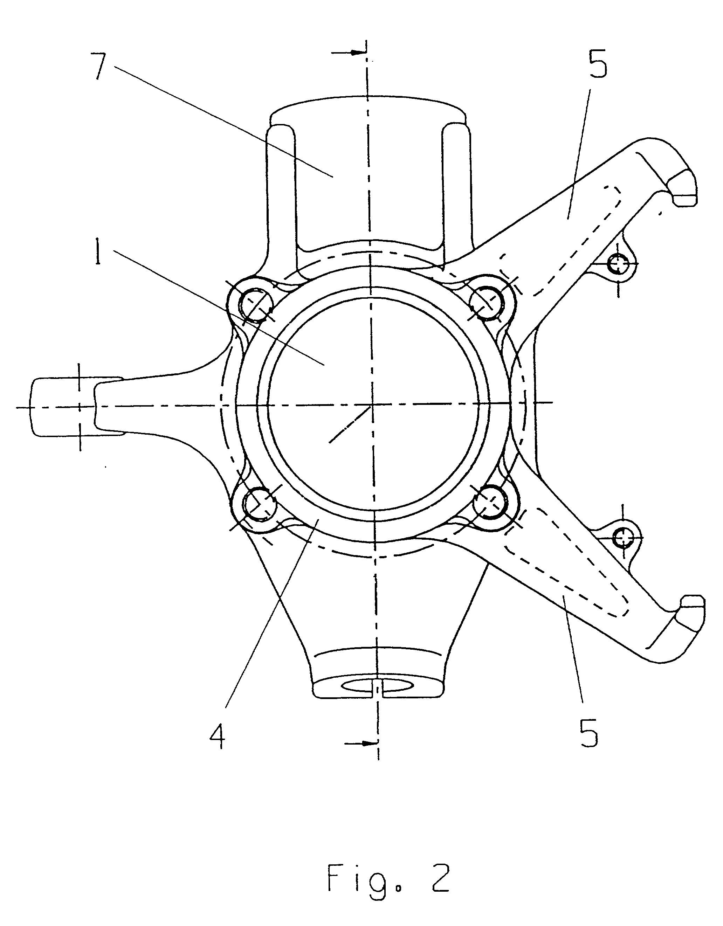

In Figur 2 sind zur Vereinfachung nur die Lagereinheit 1, das Gehäuse 4 mit den Bremsträgerarmen 5 und der Radträger 7 bezeichnet.

## Patentansprüche

1. Baueinheit für Kraftfahrzeugräder, bestehend aus einem Radträger (7), einem Wälzlager (2) und einem Radlager (1), welches mit zylindrischem Aussendurchmesser in ein Gehäuse (4) eingepresst ist, welches mit integrierten Bremsträgerarmen (5) versehen ist und mit einem Radträger (7) aus Aluminium oder Eisenguss/Stahl derart axial verschraubt ist, dass dabei gleichzeitig die Baueinheit verspannt und befestigt ist,
**dadurch gekennzeichnet, dass**
der Radträger (7) oder das Gehäuse (4) im Bereich der Stirnseite des Aussenrings (1') des Wälzlagers (2) mit elastisch verformbaren Ansätzen (8) zur definierbaren im axialer Richtung gerichteten Verspannung versehen ist, wobei eine definierte axiale Verspannung erreicht wird zur Vermeidung von eventuellen Ungenauigkeiten durch die Doppelpassung und zur Vermeidung einer unzulläsigen hohen Verspannung des Lageraussenrings durch die Verschraubung.

2. Baueinheit nach Auspruch 1, **dadurch gekennzeichnet, dass** die elastisch verformbaren Ansätze (8) als umlaufende Schulter ausgebildet sind.

## Claims

1. Structural unit for motor vehicle wheels, consisting of a wheel carrier (7), of a rolling bearing (2) and of a wheel bearing (1) which is pressed with a cylindrical outside diameter into a housing (4) which is provided with integrated brake carrier arms (5) and is screwed axially to a wheel carrier (7) consisting of aluminium or cast iron/steel in such a way that the structural unit is in this case at the same time braced and fastened, **characterized in that** the wheel carrier (7) or the housing (4) is provided, in the region of the end face of the outer ring (1') of the rolling bearing (2), with elastically deformable extensions (8) for definable bracing directed in the axial direction, a defined axial bracing being achieved, for the avoidance of possible inaccuracies, by means of the double fit and, for the avoidance of an inadmissibly high bracing of the bearing outer ring, by means of the screw connection.

2. Structural unit according to Claim 1, **characterized in that** the elastically deformable extensions (8) are designed as a peripheral shoulder.

## Revendications

1. Assemblage pour roues de véhicule automobile, se composant d'un support de roue (7), d'un palier à roulement (2) et d'un palier de roue (1), qui est pressé avec son diamètre extérieur cylindrique dans un boîtier (4), lequel est pourvu de bras de support de freins intégrés (5) et est vissé axialement avec un support de roue (7) en aluminium ou en fonte/acier de telle sorte que l'assemblage soit simultanément serré et fixé,
**caractérisé en ce que**
le support de roue (7) ou le boîtier (4) est pourvu dans la région du côté frontal de l'anneau extérieur (1') du palier à roulement (2) de saillies (8) déformables élastiquement pour réaliser un serrage définissable orienté dans la direction axiale, un serrage axial défini étant obtenu pour éviter des imprécisions éventuelles du fait de la double adaptation et pour éviter un serrage élevé inacceptable de l'anneau extérieur de palier par le vissage.

2. Assemblage selon la revendication 1, **caractérisé en ce que** les saillies (8) déformables élastiquement sont réalisées sous forme d'épaulements périphériques.
